(19) Europäisches Patentamt
European Patent Office
Office européen des brevets

(11) EP 4 618 300 A1

(12) EUROPEAN PATENT APPLICATION
published in accordance with Art. 153(4) EPC

(43) Date of publication:
17.09.2025 Bulletin 2025/38

(21) Application number: 23890830.5

(22) Date of filing: 15.11.2023

(51) International Patent Classification (IPC):
H01M 50/531 (2021.01)    H01M 50/107 (2021.01)
H01M 50/536 (2021.01)    H01M 10/04 (2006.01)

(52) Cooperative Patent Classification (CPC):
Y02E 60/10

(86) International application number:
PCT/CN2023/131864

(87) International publication number:
WO 2024/104399 (23.05.2024 Gazette 2024/21)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 17.11.2022 CN 202211441730

(71) Applicant: XIAMEN AMPACE TECHNOLOGY
LIMITED
Xiamen City, Fujian Province 361000 (CN)

(72) Inventors:
• WANG, Qi
  Xiamen City, Fujian Province (CN)
• LI, Weiwei
  Xiamen City, Fujian Province (CN)
• HAN, Xianglong
  Xiamen City, Fujian Province (CN)

(74) Representative: Icosa
83 avenue Denfert-Rochereau
75014 Paris (FR)

(54) **CYLINDRICAL BATTERY AND ELECTRICAL DEVICE**

(57) This application discloses a cylindrical battery and an electric device. The cylindrical battery includes a housing, an electrode assembly, and a current collector plate. The electrode assembly and the current collector plate are accommodated in the housing, and the electrode assembly includes a flattened surface, the flattened surface being provided at an end of the electrode assembly. The current collector plate includes a substrate and a bending portion interconnected. The substrate and the bending portion are able to bend toward each other, and the substrate is connected to the flattened surface. The substrate includes an axial hole and a plurality of through holes spaced apart and running through the substrate. Along a thickness direction of the substrate, a projection area of the substrate is S1, and a sum of projection areas of the plurality of through holes is S2, where $4\% \leq S2/S1 \leq 16\%$. In the foregoing cylindrical battery, the plurality of the through holes on the substrate can not only serve as channels for an electrolyte to infiltrate the electrode assembly, but also reduce the influence of the current collector plate on the infiltration of the electrolyte.

FIG. 5

**Description**

**TECHNICAL FIELD**

This application relates to the field of energy storage technologies, and in particular, to a cylindrical battery and an electric device.

**BACKGROUND**

In a cylindrical battery, a current collector at an end of an electrode assembly forms a flattened surface, and a current collector plate is attached to the flattened surface. A structure formed by the current collector plate and the flattened surface affects the infiltration of an electrolyte, which may lead to difficulties in replenishing electrolyte inside the electrode assembly, affecting the charge and discharge performance and the service life of the cylindrical battery.

**SUMMARY**

In view of the foregoing situation, it is necessary to provide a cylindrical battery to reduce the influence of a current collector plate on the infiltration of an electrolyte.

An embodiment of this application provides a cylindrical battery including a housing, an electrode assembly, and a current collector plate, where the electrode assembly and the current collector plate are accommodated in the housing, and the electrode assembly includes a flattened surface, the flattened surface being provided at an end of the electrode assembly. The current collector plate includes a substrate and a bending portion interconnected. The substrate and the bending portion are able to bend toward each other, and the substrate is connected to the flattened surface. The substrate includes an axial hole and a plurality of through holes spaced apart and running through the substrate. Along a thickness direction of the substrate, a projection area of the substrate is S1, and a sum of projection areas of the plurality of the through holes is S2, where $4\% \leq S2/S1 \leq 16\%$.

In the foregoing cylindrical battery, the substrate of the current collector plate is connected to the flattened surface of the electrode assembly. The substrate is provided with the axial hole and the plurality of through holes spaced apart and running through the substrate. In addition, the sum S2 of the projection areas of all the through holes and the projection area S1 of the substrate satisfy $4\% \leq S2/S1 \leq 16\%$. The plurality of the through holes on the substrate can serve as channels for an electrolyte to infiltrate the electrode assembly, reducing the influence of the current collector plate on the infiltration of the electrolyte.

In some embodiments of this application, $5\% \leq S2/S1 \leq 10\%$. In this case, the influence of the current collector plate on the infiltration of the electrolyte can be reduced, and the current-carrying capacity between the substrate and the flattened surface can also be improved.

In some embodiments of this application, the electrode assembly includes a positive electrode terminal and a negative electrode terminal, where along an axial direction of the cylindrical battery, the positive electrode terminal and the negative electrode terminal are located at two ends of the electrode assembly, respectively; and the flattened surface is located at the positive electrode terminal of the electrode assembly.

In some embodiments of this application, the plurality of through holes are spaced apart along a circumferential direction of the cylindrical battery. The inventors have found that, along a radial direction of the cylindrical battery, if no through hole is provided in a region located within 1/5 to 4/5 of a radius outward from the center of the substrate, the infiltration of the electrolyte is relatively poor. Therefore, at least one through hole being provided in this region is conducive to improving the infiltration of the electrolyte on the electrode assembly.

In some embodiments of this application, the plurality of through holes include a plurality of first through holes, where the plurality of first through holes are arranged along the radial direction of the cylindrical battery to form a column of first through holes; and a plurality of columns of first through holes are spaced apart along the circumferential direction of the cylindrical battery, further improving the infiltration of the electrolyte.

In some embodiments of this application, along the radial direction of the cylindrical battery, 1 to 5 first through holes are provided in each column.

In some embodiments of this application, along the radial direction of the cylindrical battery, 2 or 3 first through holes are provided in each column.

In some embodiments of this application, a diameter of each through hole ranges from 1 mm to 3 mm.

In some embodiments of this application, the diameter of each through hole ranges from 1.3 mm to 2.5 mm.

In some embodiments of this application, the plurality of through holes include a second through hole, and when viewed along the thickness direction of the substrate, the second through hole is located between the bending portion and the axial hole.

In some embodiments of this application, at least two second through holes are provided.

In some embodiments of this application, the current collector plate has a first boundary, the first boundary being located between the substrate and the bending portion, and the substrate and the bending portion are able to bend toward each other along the first boundary.

In some embodiments of this application, the current collector plate further includes a first notch portion, the first notch portion connecting the substrate and the bending portion.

An embodiment of this application further provides an electric device including the cylindrical battery according to any one of the foregoing embodiments.

In the foregoing electric device, the plurality of through holes are provided on the current collector plate of the cylindrical battery. This improves the infiltration of the electrolyte on the electrode assembly, improves the charge and discharge performance and the service life of the cylindrical battery, and reduces the influence of the charge and discharge performance and the service life of the cylindrical battery on the electric device.

## BRIEF DESCRIPTION OF DRAWINGS

FIG. 1 is a schematic structural diagram of a cylindrical battery according to an embodiment of this application.

FIG. 2 is a cross-sectional view of the cylindrical battery in FIG. 1 along II-II.

FIG. 3 is a schematic structural diagram of an electrode assembly according to an embodiment of this application.

FIG. 4 is a schematic structural diagram of a flattened surface formed on an electrode assembly according to an embodiment of this application.

FIG. 5 is a schematic structural diagram of a current collector plate according to an embodiment of this application.

FIG. 6 is a cross-sectional view of the cylindrical battery in FIG. 2 along VI-VI.

FIG. 7 is a schematic structural diagram of an extended embodiment of the current collector plate in FIG. 5.

FIG. 8 is a schematic structural diagram of an extended embodiment of the current collector plate in FIG. 5.

FIG. 9 is a schematic structural diagram of an extended embodiment of the current collector plate in FIG. 5.

FIG. 10 is a schematic diagram of an electric device according to an embodiment of this application.

Reference signs of main components:

| | |
|---|---|
| Cylindrical battery | 100 |
| Housing | 10 |
| Electrode assembly | 20 |
| Positive electrode terminal | 201 |
| Negative electrode terminal | 202 |
| Positive electrode plate | 203 |
| Negative electrode plate | 204 |
| Separator | 205 |
| Flattened surface | 206 |
| Current collector plate | 30 |
| Substrate | 301 |
| First through hole | 3011 |
| Second through hole | 3012 |
| Axial hole | 3013 |
| Bending portion | 302 |
| First portion | 3021 |
| Second portion | 3022 |
| First boundary | 303 |
| First notch portion | 304 |
| Second boundary | 305 |
| Second notch portion | 306 |
| Output terminal | 40 |
| Conductive member | 50 |
| Electric device | 200 |

This application will be further described with reference to the accompanying drawings in the following specific embodiments.

## DESCRIPTION OF EMBODIMENTS

The following describes the technical solutions in some embodiments of this application with reference to the accompanying drawings in these embodiments of this application. Apparently, the described embodiments are some but not all of these embodiments of this application.

It should be noted that when one component is assumed as being "connected to" another component, it may be connected to the another component directly or with a component possibly present therebetween. When one component is assumed as being "disposed on/in" another component, the component may be provided directly on/in the another component or with a component possibly present therebetween. In this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, or an internal communication between two elements. Persons of ordinary skills in the art can understand specific meanings of these terms in this application as appropriate to specific situations.

In the description of some embodiments in this application, "a plurality of" means at least two unless otherwise specifically stated.

In this specification, reference to "embodiment" means that specific features, structures, or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that some embodiments described herein may be combined with other embodiments.

In a cylindrical battery, a current collector at an end of an electrode assembly forms a flattened surface, and a current collector plate is attached to the flattened surface. A structure formed by the current collector plate and the flattened surface affects the infiltration of an electrolyte, which may lead to difficulties in replenishing electrolyte inside the electrode assembly, affecting the charge and discharge performance and the service life of the cylindrical battery.

An embodiment of this application provides a cylindrical battery including a housing, an electrode assembly, and a current collector plate. The electrode assembly and the current collector plate are accommodated in the housing, and the electrode assembly includes a flattened surface, the flattened surface being provided at an end of the electrode assembly. The current collector plate includes a substrate and a bending portion interconnected. The substrate and the bending portion are able to bend toward each other, and the substrate is connected to the flattened surface. The substrate includes an axial hole and a plurality of through holes spaced apart and running through the substrate. Along a thickness direction of the substrate, a projection area of the substrate is S1, and a sum of projection areas of the plurality of the through holes is S2, where $4\% \leq S2/S1 \leq 16\%$.

In the foregoing cylindrical battery, the substrate of the current collector plate is connected to the flattened surface of the electrode assembly. The substrate is provided with the axial hole and the plurality of through holes spaced apart and running through the substrate. In addition, the sum S2 of the projection areas of all the through holes and the projection area S1 of the substrate satisfy $4\% \leq S2/S1 \leq 16\%$. The plurality of the through holes on the substrate can serve as channels for an electrolyte to infiltrate the electrode assembly, reducing the influence of the current collector plate on the infiltration of the electrolyte.

The following further describes some embodiments of this application with reference to the accompanying drawings.

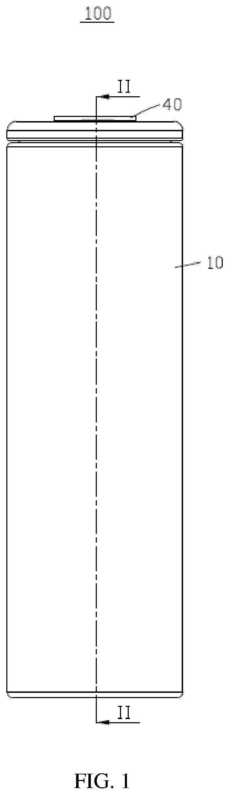

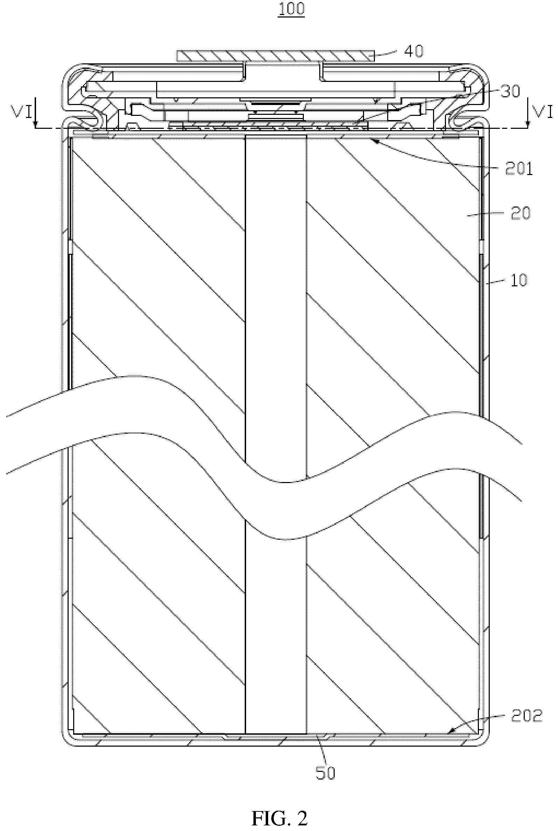

As shown in FIGs. 1 and 2, an embodiment of this application provides a cylindrical battery 100 including a housing 10, an electrolyte (not shown in the figure), an electrode assembly 20, and a current collector plate 30. The electrolyte, the electrode assembly 20, and the current collector plate 30 are accommodated in the housing 10. The current collector plate 30 is connected to the electrode assembly 20. The electrolyte can flow through a gap inside the housing 10, and the electrolyte connects the electrode assembly 20 and the current collector plate 30.

In an embodiment, the cylindrical battery 100 further includes an output terminal 40. A portion of the output terminal 40 is accommodated in the housing 10 and connected to the current collector plate 30. Another portion of the output terminal 40 is exposed on a surface of the housing 10. In an embodiment, a portion of the output terminal 40 exceeds a surface of the housing 10.

In an embodiment, the housing 10 includes a conductive material, and the housing 10 is connected to the electrode assembly 20. One of the output terminal 40 and the housing 10 is a positive electrode of the cylindrical battery 100, and the other of the output terminal 40 and the housing 10 is a negative electrode of the cylindrical battery 100. In an embodiment, the output terminal 40 is the positive electrode of the cylindrical battery 100, and the housing 10 is the negative electrode of the cylindrical battery 100.

In an embodiment, the cylindrical battery 100 includes an insulating member (not shown in the figure), the insulating member connecting the output terminal 40 and the housing 10, which is conducive to reducing the risk of a short circuit between the output terminal 40 and the housing 10, thereby improving the safety performance of the cylindrical battery 100.

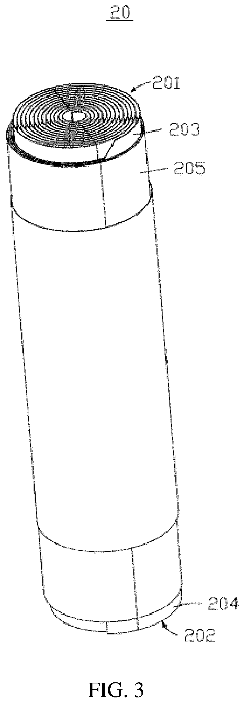

As shown in FIGs. 2 and 3, in an embodiment, the electrode assembly 20 is a wound structure. Along an axial direction of the cylindrical battery 100, an end of the electrode assembly 20 is a positive electrode terminal 201, and another end of the electrode assembly 20 is a negative electrode terminal 202. The current collector plate 30 and the output terminal 40 are located at the positive electrode terminal 201 of the electrode assembly 20. The current collector plate 30 connects the positive electrode terminal 201 of the electrode assembly 20 and the output terminal 40. The housing 10 is connected to the negative electrode terminal 202 of the electrode assembly 20.

In an embodiment, the electrode assembly 20 includes a positive electrode plate 203, a negative electrode plate 204, and a separator 205. The separator 205 is disposed between the positive electrode plate 203 and the negative electrode plate 204. The positive electrode plate 203, the separator 205, and the negative electrode plate 204 are wound together to form a cylindrical wound structure. Along an axis direction of the wound structure, the positive electrode plate 203 on one side of the electrode assembly 20 exceeds the separator 205, and the negative electrode plate 204 on another side of the electrode assembly 20 exceeds the separator 205.

In an embodiment, the cylindrical battery 100 further includes a conductive member 50, where the conductive member 50 is disposed inside the housing 10, and the conductive member 50 connects the negative electrode terminal 202 of the electrode assembly 20 and the housing 10. This is conducive to improving the connection stability of the negative electrode terminal 202 and the housing 10, and reducing the risk of the negative electrode terminal 202 being disconnected from the housing 10.

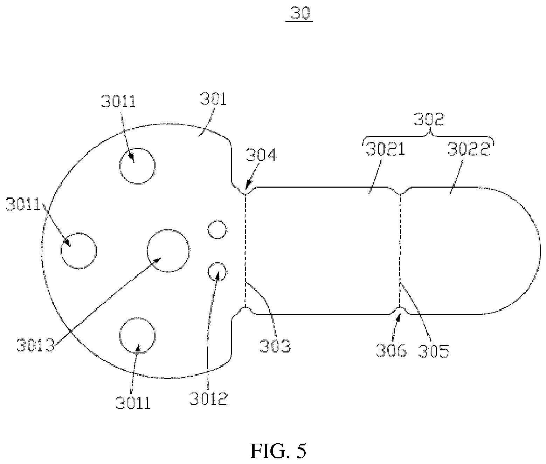

As shown in FIGs. 2, 4, and 5, the electrode assembly 20 includes a flattened surface 206, where the flattened surface 206 is formed by the positive electrode plate 203 exceeding the separator 205. Along the axial direction of the cylindrical battery 100, the flattened surface 206 is provided on an end surface of the positive electrode terminal 201. The current collector plate 30 is connected to the positive electrode terminal 201 through a connection with the flattened surface 206. The current collector plate 30 includes a substrate 301 and a bending portion 302. The substrate 301 and the bending portion 302 are interconnected and are able to bend toward each other. The substrate 301 is connected to the flattened surface 206. In an embodiment, the substrate 301 and the flattened surface 206 are connected through welding, such as ultrasonic welding or laser welding.

In an embodiment, the substrate 301 and the bending portion 302 face each other after bending; and the flattened surface 206, the substrate 301, the bending portion 302, and the output terminal 40 are arranged along the axial direction of the cylindrical battery 100. This is conducive to reducing the influence of the current collector plate 30 on space inside the housing 10 and improving the utilization of the space inside the housing 10.

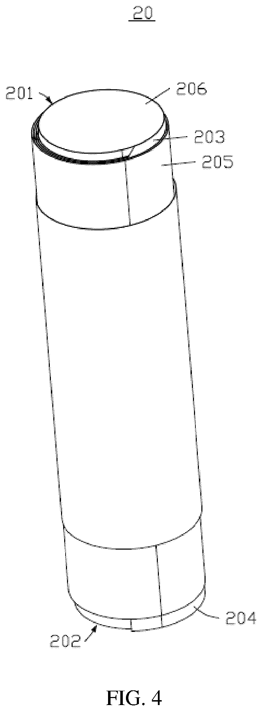

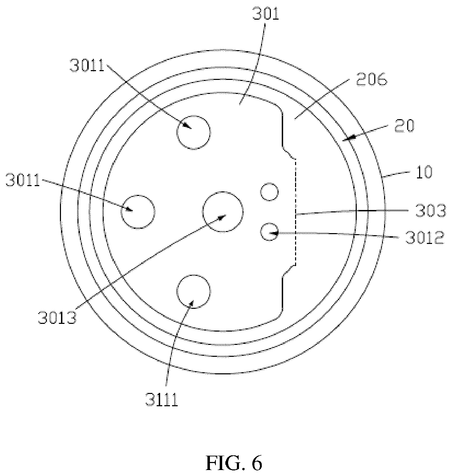

As shown in FIGs. 4, 5, and 6, the substrate 301 includes an axial hole 3013 and a plurality of through holes spaced apart. The axial hole 3013 and the plurality of through holes all run through the substrate 301, so that the electrolyte is in contact connection with the flattened surface 206 through the through hole. Compared with the current collector plate 30 with no through hole on the substrate 301, the current collector plate 30 with no through hole being attached to the flattened surface 206 and affecting the infiltration of the electrolyte on the electrode assembly 20, the current collector plate 30 in this application allows for a direct contact connection of the electrolyte with the flattened surface 206. This is conducive to improving the infiltration of the electrolyte on the electrode assembly 20, and improving the charge and discharge performance and service life of the cylindrical battery 100.

It can be understood that when the current collector plate 30 is assembled inside the cylindrical battery 100, the axial hole 3013 is located at the axis of the cylindrical battery 100 instead of the axis of the substrate 301. The axial hole 3013 in this application is not used for limiting a shape of the substrate 301. Along the axial direction of the cylindrical battery 100, a projection of the axial hole 3013 overlaps with a projection of the axis of the cylindrical battery 100.

Along the thickness direction of the substrate 301, that is, along the axial direction of the cylindrical battery 100, a projection area of the substrate 301 is S1, and a sum of projection areas of the plurality of through holes is S2, where $4\% \leq S2/S1 \leq 16\%$. In this way, the infiltration of the electrolyte on the electrode assembly 20 can be improved. A solid portion of the substrate 301 is connected to the flattened surface 206. This can ensure that the substrate 301 has a sufficient area for connection with the flattened surface 206, improving the connection stability of the current collector plate 30 and the electrode assembly 20, thereby improving the vibration resistance of the cylindrical battery 100. In addition, this can ensure the current-carrying capacity of the substrate 301, reducing the influence of the through hole on the current-carrying capacity of the substrate 301. The projection area S1 of the substrate 301 is a value, where the value is obtained by subtracting a projection area of the axial hole 3013 from an area of a region enclosed by a projection of an outer contour of the substrate 301 along the thickness direction of the substrate 301. In an embodiment, along the thickness direction of the substrate 301, the projection area S1 of the substrate 301 is equal to a difference between a value and the projection area of the axial hole 3013, where the value is obtained by adding the sum S2 of the projection areas of the plurality of through holes and a projection area of the solid portion of the substrate 301.

It should be noted that the current collector plate 30 is connected to the flattened surface 206, and current passes through a contact region between the current collector plate 30 and the flattened surface 206. As an area of the contact region decreases, contact resistance between the current collector plate 30 and the flattened surface 206 increases, reducing the current-carrying capacity. As the current passing through the contact region is constant, the contact resistance increases, leading to temperature rise. In this application, the sum S2 of the projection areas of all the through holes and the projection area S1 of the substrate satisfy 4%≤S2/S1≤16%. This is conducive to reducing the influence of the current collector plate 30 on the infiltration of the electrolyte, improving the current-carrying capacity between the substrate 301 and the flattened surface 206, reducing the temperature rise in the contact region between the current collector plate 30 and the flattened surface 206, and reducing the influence of the temperature rise on the cylindrical battery 100.

In an embodiment, 5%≤S2/S1≤10%, which is conducive to further reducing the influence of the current collector plate 30 on the infiltration of the electrolyte, and improving the current-carrying capacity between the substrate 301 and the flattened surface 206.

In an embodiment, a value of S2/S1 is any one of 4%, 5%, 6%, 7%, 7.6%, 8%, 9%, 10%, 11%, 12%, 13%, 14%, 15%, or 16%.

In an embodiment, the current collector plate 30 has a first boundary 303. The first boundary 303 is located between the substrate 301 and the bending portion 302. The substrate 301 and the bending portion 302 are able to bend toward each other along the first boundary 303. In an embodiment, the first boundary 303 is a virtual line. In an embodiment, the first boundary 303 is a crease.

In an embodiment, the current collector plate 30 has a first groove (not shown in the figure). The first groove is located between the substrate 301 and the bending portion 302. The substrate 301 and the bending portion 302 are able to bend toward each other along the first groove. The first groove forms the first boundary 303. The first groove facilitates precise bending of the current collector plate 30, reducing the influence of improper bending of the current collector plate 30 on the space inside the housing 10.

In an embodiment, the current collector plate 30 further includes a first notch portion 304, the first notch portion 304 connecting the substrate 301 and the bending portion 302. The first notch portion 304 makes a connection region between the substrate 301 and the bending portion 302 form a weak region with low structural stiffness, facilitating bending. In an embodiment, when viewed along the thickness direction of the substrate 301, the first notch portion 304 is recessed inward from an edge of the current collector plate 30. In an embodiment, two first notch portions 304 are provided, and the two first notch portions 304 are connected to two ends of the first boundary 303, respectively. Optionally, the first boundary 303 intersects the first notch portion 304.

In an embodiment, when viewed along the thickness direction of the substrate 301, the outer contour of the substrate 301 is arc-shaped, and the axial hole 3013 is located at the center of the arc. In an embodiment, when viewed along the thickness direction of the substrate 301, the bending portion 302 is approximately rectangular, and the width of the bending portion 302 is less than the diameter of the substrate 301. In an embodiment, when viewed along the thickness direction of the substrate 301, a weld joint between the substrate 301 and the flattened surface 206 is ring-shaped, which is conducive to improving the connection stability of the substrate 301 and the flattened surface 206, and improving the vibration resistance of the cylindrical battery 100.

In an embodiment, the plurality of through holes are spaced apart along a circumferential direction of the cylindrical battery 100. When the substrate 301 is connected to the flattened surface 206, the plurality of through holes spaced apart in a ring shape allow the electrolyte to be in contact connection with a plurality of positions on the flattened surface 206, which is conducive to improving infiltration uniformity of the electrolyte on the electrode assembly 20, and enhancing the charge and discharge performance of the electrode assembly 20.

In an embodiment, along a radial direction of the cylindrical battery 100, at least one through hole is provided in a region located within 1/5 to 4/5 of a radius outward from the center of the cylindrical battery 100. The inventors have found that if no through hole is provided in the region located within 1/5 to 4/5 of the radius outward from the axis of the cylindrical battery 100, the infiltration of the electrolyte is relatively poor. Therefore, at least one through hole is provided in this region, so that the electrolyte can be in contact connection with a middle position of the radius of the flattened surface 206, which is conducive to improving the infiltration of the electrolyte on the electrode assembly 20.

In an embodiment, the plurality of through holes include a plurality of first through holes 3011. Along the radial direction of the cylindrical battery 100, the plurality of first through holes 3011 are spaced apart to form a column of first through holes 3011. This is conducive to allowing the electrolyte to be in contact connection with the plurality of positions on the flattened surface 206, thereby improving the infiltration uniformity of the electrolyte on the electrode assembly 20, and improving the charge and discharge performance of the electrode assembly 20.

Along the radial direction of the cylindrical battery 100, at least one first through hole 3011 is provided in the region located within 1/5 to 4/5 of the radius outward from the center of the cylindrical battery 100. In an embodiment, along the radial direction of the cylindrical battery 100, 1 to 5 first through holes 3011 are provided in each column. In an embodiment, along the radial direction of the cylindrical battery 100, 2 or 3 first through holes 3011 are provided in each column. In an embodiment, along the radial direction of the cylindrical battery 100, a quantity of the first through holes 3011 in each column is any one of 1, 2, 3, 4, or 5.

In an embodiment, along the circumferential direction of the cylindrical battery 100, a plurality of columns of first through holes 3011 are spaced apart. This is conducive to allowing the electrolyte to be in contact connection with the plurality of positions on the flattened surface 206, thereby improving the infiltration uniformity of the electrolyte on the electrode assembly 20, improving the charge and discharge performance of the electrode assembly 20, and reducing impedance and internal impedance of a connection region between the substrate 301 and the flattened surface 206. In an embodiment, the impedance includes at least one of electronic conduction impedance or electrochemical reaction impedance.

In an embodiment, a design quantity of the first through holes 3011 in each column is subject to a design specification. Assuming that a quantity of winding layers of the electrode assembly 20 is n, the thickness of a single layer of the positive electrode plate 203 after winding is a, the thickness of a single layer of the negative electrode plate 204 after winding is b, the thickness of a single layer of the separator 205 after winding is c, the diameter of the first through hole 3011 is d1, a distance between two adjacent first through holes 3011 in a same column is m, a quantity of well-infiltrated layers of an outer ring of the electrode assembly 20 is x, and the design quantity of the first through holes 3011 in each column is e,

$$e=(a+b+2*c)*(n-2*x)/(d1+m).$$

If a value of e includes a decimal, it is rounded to the nearest integer.

The quantity n of the winding layers of the electrode assembly 20 refers to a number of unit layers forming the electrode assembly 20 by winding, where the unit layers are obtained by stacking the positive electrode plate 203, the separator 205, and the negative electrode plate 204. The quantity x of the well-infiltrated layers of the outer ring of the electrode assembly 20 refers to a quantity of well-infiltrated unit layers of the outer ring in the electrode assembly 20 formed by winding the unit layers.

In an embodiment, the diameter of the first through hole 3011 is d1, where 1 mm≤d1≤3 mm. In this way, the infiltration of the electrolyte on the electrode assembly 20 can be improved, and the connection stability of the substrate 301 and the flattened surface 206 can be improved. In an embodiment, 1.3 mm≤d1≤2.5 mm.

In an embodiment, a value of d1 is any one of 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, or 3 mm.

In an embodiment, the plurality of through holes include a second through hole 3012. When viewed along the thickness direction of the substrate 301, the second through hole 3012 is located between the axial hole 3013 and the bending portion 302 and is close to the bending portion 302. The second through hole 3012 is conducive to allowing the electrolyte to be in contact connection with the flattened surface 206 close to a region of the first boundary 303, thereby allowing the electrolyte to be in contact connection with the plurality of positions on the flattened surface 206, improving the infiltration uniformity of the electrolyte on the electrode assembly 20, and improving the charge and discharge performance of the electrode assembly 20.

In an embodiment, at least two second through holes 3012 are provided. Optionally, two second through holes 3012 are provided, and the two second through holes 3012 are spaced apart along an extension direction of the first boundary 303.

In an embodiment, the diameter of the second through hole 3012 is d2, where 1 mm≤d2≤3 mm. This is conducive to ensuring both the infiltration of the electrolyte on the electrode assembly 20 and the connection stability of the substrate 301 and the flattened surface 206. In an embodiment, 1.3 mm≤d2≤2.5 mm.

In an embodiment, a value of d2 is any one of 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, or 3 mm.

In an embodiment, along the axial direction of the cylindrical battery 100, the projection of the axial hole 3013 overlaps with a projection of the winding center of the electrode assembly 20. This is conducive to allowing the electrolyte to enter the winding center of the electrode assembly 20 through the substrate 301, improving the infiltration uniformity of the electrolyte on the electrode assembly 20, and improving the charge and discharge performance of the electrode assembly 20.

In an embodiment, the diameter of the axial hole 3013 is d3, where 1 mm≤d3≤3 mm. This is conducive to ensuring both the infiltration of the electrolyte on the electrode assembly 20 and the connection stability of the substrate 301 and the flattened surface 206. In an embodiment, 1.3 mm≤d3≤2.5 mm.

In an embodiment, a value of d3 is any one of 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, or 3 mm.

In an embodiment, the bending portion 302 includes a first portion 3021 and a second portion 3022. The first portion 3021 is located between the substrate 301 and the second portion 3022, and the first portion 3021 connects the substrate 301 and the second portion 3022. The first portion 3021 and the second portion 3022 are able to bend toward each other.

In an embodiment, the current collector plate 30 has a second boundary 305. The second boundary 305 is located between the first portion 3021 and the second portion 3022. The first portion 3021 and the second portion 3022 are able to bend toward each other along the second boundary 305. In an embodiment, the second boundary 305 is a virtual line. In an embodiment, the second boundary 305 is a crease.

In an embodiment, the current collector plate 30 has a second groove (not shown in the figure). The second groove is located between the first portion 3021 and the second portion 3022. The first portion 3021 and the second portion 3022 are able to bend toward each other along the second groove, and the second groove forms the second boundary 305. The second groove facilitates precise bending of the current collector plate 30, reducing the influence of improper bending of the current collector plate 30 on the space inside the housing 10.

In an embodiment, the current collector plate 30 further includes a second notch portion 306. The second notch portion 306 connects the first portion 3021 and the second portion 3022, and the second boundary 305 intersects the second notch portion 306. The second notch portion 306 makes a connection region between the first portion 3021 and the second portion 3022 form a weak region with low structural stiffness, facilitating bending. In an embodiment, when viewed along the thickness direction of the substrate 301, the second notch portion 306 is recessed from an edge of the current collector plate 30 to an interior of the bending portion 302. In an embodiment, two second notch portions 306 are provided, and the two second notch portions 306 are connected to two ends of the second boundary 305, respectively.

In an embodiment, in the cylindrical battery 100, the substrate 301, the first portion 3021, and the second portion 3022 are arranged along the axial direction of the cylindrical battery 100, and the second portion 3022 is connected to the output terminal 40.

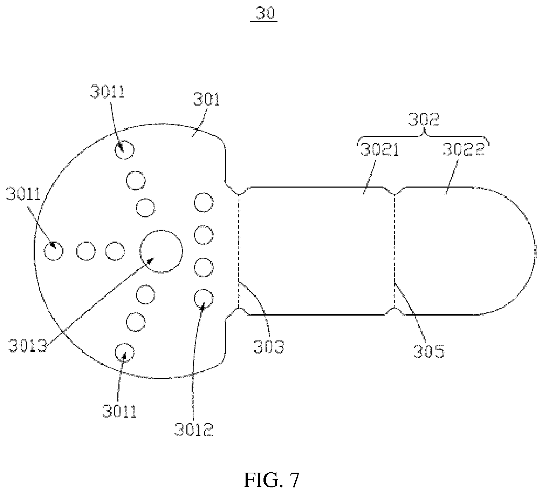

As shown in FIG. 7, in an embodiment, along the radial direction of the cylindrical battery 100, three first through holes 3011 are provided in each column. In an embodiment, three columns of first through holes 3011 are spaced apart along a circumferential direction of the substrate 301, and a central angle between two adjacent columns of first through holes 3011 is approximately 60°. Four second through holes 3012 are provided, and the four second through holes 3012 are spaced apart along the first boundary 303.

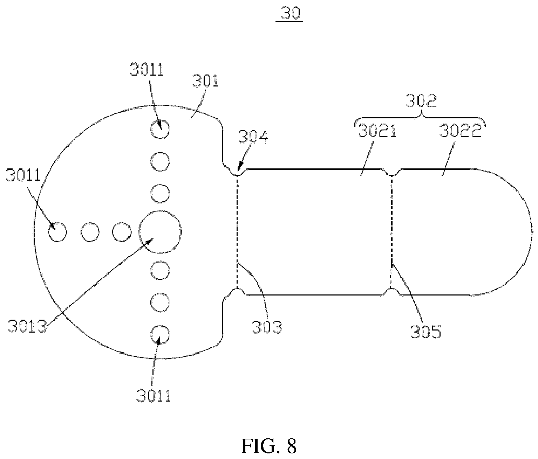

As shown in FIG. 8, in an embodiment, along the radial direction of the cylindrical battery 100, three first through holes 3011 are provided in each column. Along the circumferential direction of the cylindrical battery 100, three columns of first through holes 3011 are spaced apart, and a central angle between two adjacent columns of first through holes 3011 is approximately 90°.

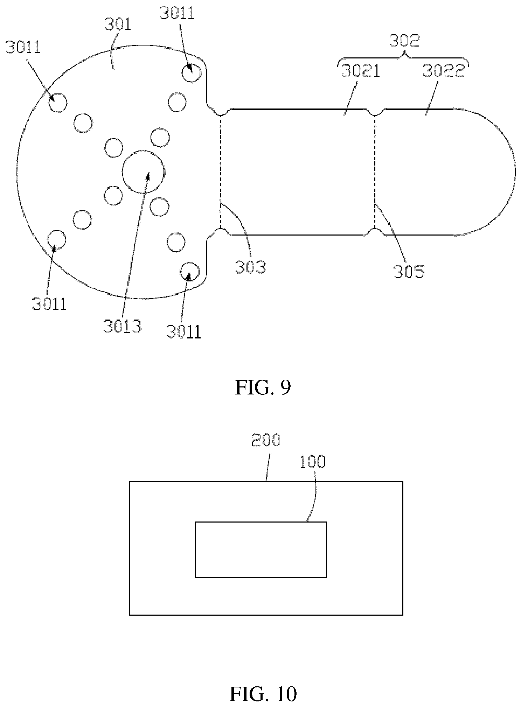

As shown in FIG. 9, in an embodiment, along the radial direction of the cylindrical battery 100, three first through holes 3011 are provided in each column. Along the circumferential direction of the cylindrical battery 100, four columns of first through holes 3011 are spaced apart, and a central angle between two adjacent columns of first through holes 3011 is approximately 75°.

To verify the influence of the current collector plate 30 in this application on the infiltration of the electrolyte, a plurality of comparison tests were conducted. Specific information is as follows:

A plurality of cylindrical batteries 100 were selected for comparative example tests and example tests, respectively. During test of each group of comparative examples, 10 sample cylindrical batteries 100 were used. During test of each group of examples, 10 sample cylindrical batteries 100 were used. In a comparative example, a cylindrical battery 100 used a conventional current collector plate 30 with no through hole. In an Example, a cylindrical battery 100 used a design in this application.

An average value of temperature rise of 10 cylindrical batteries 100 in a specific environment in a plurality of groups of comparative examples and examples was obtained.

Temperature rise test method: In an environment of 25±0.5°C, a cylindrical battery was charged at a constant current of 2C until voltage of the cylindrical battery reached 4.2 V, and the cylindrical battery was charged at a constant voltage of 4.2 V until the current decreased to 0.025C and then left standing for 60 minutes. Then, the cylinder battery was discharged at a rate of 10C until its voltage decreased to 2.5 V and then left standing for 60 minutes. During test, temperature of the cylindrical battery 100 was collected every 10s.

Temperature rise was calculated in a method as follows: The highest temperature among all temperatures collected was obtained. A temperature rise was obtained by subtracting an ambient temperature (25°C) from the highest temperature.

Statistical results are shown in the following table.

| | Sum S2 of projection areas of a plurality of through holes (mm$^2$) | Projection area S1 of substrate (mm$^2$) | S2/S1 | Temperature rise/°C |
|---|---|---|---|---|
| Comparative Example 1 | 0 | 229.04 | 0.00% | 47.1 |
| Comparative Example 2 | 4.92 | 229.04 | 2.15% | 39.8 |
| Example 1 | 9.05 | 229.04 | 4.01% | 35 |

(continued)

| | Sum S2 of projection areas of a plurality of through holes (mm$^2$) | Projection area S1 of substrate (mm$^2$) | S2/S1 | Temperature rise/°C |
|---|---|---|---|---|
| Example 2 | 12.29 | 229.04 | 5.37% | 34.1 |
| Example 3 | 17.38 | 229.04 | 7.59% | 33.4 |
| Example 4 | 22.35 | 229.04 | 9.76% | 33.9 |
| Example 5 | 28.71 | 229.04 | 12.54% | 34.5 |
| Example 6 | 35.39 | 229.04 | 15.45% | 35.3 |
| Comparative Example 3 | 41.48 | 229.04 | 18.11% | 37.6 |
| Comparative Example 4 | 47.50 | 229.04 | 20.74% | 41 |

It can be seen from the foregoing table that the temperature rise of the cylindrical battery 100 in this application is significantly lower than that of a conventional cylindrical battery 100.

To sum up, in the cylindrical battery 100 in this application, the substrate 301 of the current collector plate 30 is connected to the flattened surface 206 of the electrode assembly 20. The substrate 301 is provided with the plurality of through holes spaced apart and running through the substrate 301. The sum S2 of the projection areas of all the through holes and the projection area S1 of the substrate 301 satisfy $4\% \leq S2/S1 \leq 16\%$. The plurality of through holes on the substrate 301 can serve as channels for the electrolyte to infiltrate the electrode assembly 20, reducing the influence of the current collector plate 30 on the infiltration of the electrolyte.

As shown in FIG. 10, an embodiment of this application provides an electric device 200 including the cylindrical battery 100 according to any one of the foregoing embodiments. The cylindrical battery 100 can supply electrical energy to the electric device 200.

In an embodiment, the electric device 200 includes but is not limited to an unmanned aerial vehicle, an electric vehicle, an electric two-wheeler, a household appliance, and an electric tool.

In the electric device 200 in this application, the cylindrical battery 100 has relatively good charge and discharge performance, reducing the influence of deterioration in the charge and discharge performance on the electric device 200.

In addition, persons skilled in the art can also make other changes within the spirit of this application. Certainly, these changes made according to the spirit of this application shall fall within the scope of this application.

**Claims**

1. A cylindrical battery, comprising a housing, an electrode assembly, and a current collector plate, wherein the electrode assembly and the current collector plate are accommodated in the housing, and the electrode assembly comprises a flattened surface, the flattened surface being provided at an end of the electrode assembly; wherein

   the current collector plate comprises a substrate and a bending portion interconnected, wherein the substrate and the bending portion are able to bend toward each other, and the substrate is connected to the flattened surface; and

   the substrate comprises an axial hole and a plurality of through holes spaced apart and running through the substrate; and along a thickness direction of the substrate, a projection area of the substrate is S1, and a sum of projection areas of the plurality of through holes is S2, wherein $4\% \leq S2/S1 \leq 16\%$.

2. The cylindrical battery according to claim 1, wherein $5\% \leq S2/S1 \leq 10\%$.

3. The cylindrical battery according to claim 1, wherein

   the electrode assembly comprises a positive electrode terminal and a negative electrode terminal, wherein along an axial direction of the cylindrical battery, the positive electrode terminal and the negative electrode terminal are located at two ends of the electrode assembly, respectively; and
   the flattened surface is located at the positive electrode terminal of the electrode assembly.

4. The cylindrical battery according to claim 1, wherein

the plurality of the through holes are spaced apart along a circumferential direction of the cylindrical battery; and along a radial direction of the cylindrical battery, at least one through hole is provided in a region located within 1/5 to 4/5 of a radius outward from the axis of the cylindrical battery.

5. The cylindrical battery according to claim 4, wherein

the plurality of the through holes comprise a plurality of first through holes, wherein
the plurality of the first through holes are arranged along the radial direction of the cylindrical battery to form a column of first through holes; and
a plurality of columns of first through holes are spaced apart along the circumferential direction of the cylindrical battery.

6. The cylindrical battery according to claim 1, wherein a diameter of each of the through holes ranges from 1 mm to 3 mm.

7. The cylindrical battery according to claim 6, wherein the diameter of each of the through holes ranges from 1.3 mm to 2.5 mm.

8. The cylindrical battery according to claim 1, wherein the plurality of the through holes comprise a second through hole, and when viewed along the thickness direction of the substrate, the second through hole is located between the bending portion and the axial hole.

9. The cylindrical battery according to claim 1, wherein the current collector plate has a first boundary, the first boundary being located between the substrate and the bending portion, and the substrate and the bending portion are able to bend toward each other along the first boundary.

10. The cylindrical battery according to claim 9, wherein the current collector plate further comprises a first notch portion, the first notch portion connecting the substrate and the bending portion.

11. An electric device, comprising the cylindrical battery according to any one of claims 1 to 10.

<u>100</u>

FIG. 1

FIG. 2

20

201

203

205

204

202

FIG. 3

20

FIG. 4

FIG. 5

FIG. 6

FIG. 7

FIG. 8

FIG. 9

FIG. 10

## INTERNATIONAL SEARCH REPORT

International application No.

**PCT/CN2023/131864**

### A. CLASSIFICATION OF SUBJECT MATTER

H01M50/531(2021.01)i; H01M50/107(2021.01)i; H01M50/536(2021.01)i; H01M10/04(2006.01)i

According to International Patent Classification (IPC) or to both national classification and IPC

### B. FIELDS SEARCHED

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, CNKI, ENTXTC, ENTXT, DWPI: 集流盘, 通孔, 导液孔, 多个, 面积, 浸润, collector, tray, through hole, liquid guide hole, multi, area, infiltration

### C. DOCUMENTS CONSIDERED TO BE RELEVANT

| Category* | Citation of document, with indication, where appropriate, of the relevant passages | Relevant to claim No. |
|---|---|---|
| PX | CN 116111291 A (XIAMEN XINNENG'AN TECHNOLOGY CO., LTD.) 12 May 2023 (2023-05-12)<br>claims 1-11 | 1-11 |
| Y | CN 208284552 U (SUZHOU ANKAO ENERGY CO., LTD.) 25 December 2018 (2018-12-25)<br>description, paragraphs 4-49, and figures 1-7 | 1-11 |
| Y | CN 212934806 U (HEFEI GUOXUAN HIGH-TECH POWER ENERGY CO., LTD.) 09 April 2021 (2021-04-09)<br>description, paragraphs 3-37, and figures 1-4 | 1-11 |
| A | CN 114597555 A (YUANJING POWER TECHNOLOGY (JIANGSU) CO., LTD. et al.) 07 June 2022 (2022-06-07)<br>entire document | 1-11 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 January 2024** | **02 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/131864**

| Patent document cited in search report | | | Publication date (day/month/year) | Patent family member(s) | Publication date (day/month/year) |
|---|---|---|---|---|---|
| CN | 116111291 | A | 12 May 2023 | None | |
| CN | 208284552 | U | 25 December 2018 | None | |
| CN | 212934806 | U | 09 April 2021 | None | |
| CN | 114597555 | A | 07 June 2022 | None | |

Form PCT/ISA/210 (patent family annex) (July 2022)